# EUROPÄISCHE PATENTANMELDUNG

(11) **EP 1 329 859 A1**
(43) Veröffentlichungstag der Anmeldung: **23.07.2003**
(21) Anmeldenummer: 02090022.1
(22) Anmeldetag: 17.01.2002
(51) Int. Cl.: G07F 19/00

(54) **Verfahren zum Ermöglichen von Geldzahlungen in Kommunikationsnetzen**

(71) Anmelder: SIEMENS AKTIENGESELLSCHAFT, 80333 München (DE)
(72) Erfinder: Klatt, Uwe, 13507 Berlin (DE); Ryll, Thomas, 10823 Berlin (DE)

(57) **Zusammenfassung**

Die Erfindung betrifft ein Verfahren zum Ermöglichen einer Geldzahlung sowie ein Verfahren zur Kommunikation zwischen Zahlungssystemen in Kommunikationsnetzen.

Dabei wird zum Ermöglichen einer Geldzahlung von einem Zahlungsempfänger (ZE21) eine einen Zahlungsschuldner (ZSR11) betreffende Zahlungsaufforderungsnachricht (2) zu einem zweiten Zahlungssystem (ZS2) übertragen; von dem zweiten Zahlungssystem (ZS2) wird erkannt, dass der Zahlungsschuldner (ZSR11) einem ersten Zahlungssystem (ZS1) zugeordnet ist, von dem zweiten Zahlungssystem (ZS2) wird eine die Zahlungsaufforderungsnachricht (2) betreffende Zahlungsnachricht (3) mittels eines kommunikationsverbindungsaufbau-steuernden Signalisierungsprotokolls (SIP) an das erste Zahlungssystem (ZS1) gesendet, um das erste Zahlungssystem (ZS1) über die Zahlungsaufforderungsnachricht (2) zu informieren und damit die Geldzahlung zu ermöglichen.

## Beschreibung

Die Erfindung betrifft ein Verfahren zum Ermöglichen einer Geldzahlung sowie ein Verfahren zur Kommunikation zwischen Zahlungssystemen in Kommunikationsnetzen.

Es besteht zum Beispiel beim sogenannten "Elektronischen Handel" (E-Commerce) die Notwendigkeit, Zahlungsvorgänge unter Nutzung von Kommunikationsnetzen durchzuführen. Solche Zahlungsvorgänge können z.B. bei der Erbringung von kostenpflichtigen Diensten oder Leistungen (z.B. Lieferung von Informationen, Daten oder Waren) über die Kommunikationsnetze auftreten. Als derartige Kommunikationsnetze werden beispielsweise das Internet, Telefon-Festnetze oder Mobilfunknetze der zweiten und dritten Generation genutzt. Zur Bezahlung der Dienste oder Leistungen werden Verfahren beispielsweise für das bargeldlose Bezahlen unter Nutzung eines mobilen Endgerätes (z.B. eines Mobiltelefons, eines Laptops, Persönlichen Digitalen Assistenten PDA oder Palmtops) und/oder eines Internet-Endgerätes (z.B. Internet-Rechner) benötigt. Es werden jedoch auch außerhalb des "Elektronischen Handels" und unabhängig von der Erbringung von Diensten Verfahren zum Bezahlen über Kommunikationsnetze benötigt, z.B. bei Spenden.

Mitunter führen Zahlungsempfänger die relativ aufwendigen Zahlungsvorgänge nicht selbst aus, sondern bedienen sich der Hilfe von Zahlungsdienstleistern, sog. "Payment Service Providern", welche Zahlungssysteme zum Abwickeln von Zahlungsvorgängen betreiben. An derartigen Zahlungsvorgängen sind also mitunter ein Zahlungsschuldner (z.B. ein Kunde, Consumer), ein Zahlungsempfänger (z.B. ein Händler, Service Provider, Merchant) und ein Zahlungssystem eines Zahlungsdienstleisters beteiligt, wobei sowohl der Zahlungsschuldner als auch der Zahlungsempfänger die Dienste des Zahlungsdienstleisters bzw. des Zahlungssystems in Anspruch nehmen.

Es ist Aufgabe der vorliegenden Erfindung, ein Verfahren anzugeben, mit dem auf einfache und zuverlässige Art und Weise Zahlungen zwischen einem Zahlungsschuldner und einem Zahlungsempfänger auch dann ermöglicht werden können, wenn der vom Zahlungsschuldner genutzte Zahlungsdienstleister dem Zahlungsempfänger unbekannt ist oder umgekehrt.

Diese Aufgabe wird erfindungsgemäß gelöst durch ein Verfahren zum Ermöglichen einer Geldzahlung unter Nutzung eines ersten Kommunikationsnetzes, wobei ein Kommunikationsendgerät eines Zahlungsschuldners einem ersten Zahlungssystem des ersten Kommunikationsnetzes zugeordnet ist, und wobei ein Zahlungsempfänger einem zweiten Zahlungssystem zugeordnet ist, bei dem von dem Zahlungsempfänger eine den Zahlungsschuldner betreffende Zahlungsaufforderungsnachricht zu dem zweiten Zahlungssystem übertragen wird, von dem zweiten Zahlungssystem erkannt wird, dass der Zahlungsschuldner dem ersten Zahlungssystem zugeordnet ist, von dem zweiten Zahlungssystem eine die Zahlungsaufforderungsnachricht betreffende Zahlungsnachricht mittels eines kommunikationsverbindungsaufbau-steuernden Signalisierungsprotokolls an das erste Zahlungssystem gesendet wird, um das erste Zahlungssystem über die Zahlungsaufforderungsnachricht zu informieren und damit die Geldzahlung zu ermöglichen.

Hierbei ist besonders vorteilhaft, dass eine Geldzahlung zwischen dem Zahlungsschuldner und dem Zahlungsempfänger auch dann ermöglicht wird, wenn dem Zahlungsschuldner ein anderes Zahlungssystem zugeordnet ist als dem Zahlungsempfänger. Es ist ebenfalls vorteilhaft, dass zur Übertragung der Zahlungsnachrichten ein an sich für einen ganz anderen Zweck (nämlich zur Signalisierung und damit Vorbereitung des Aufbaus, der Unterhaltung und des Abbaus von z.B. Sprach-Telefonaten) vorgesehenes kommunikationsverbindungsaufbau-steuernden Signalisierungsprotokoll verwendet wird. Dadurch lässt sich das erfindungsgemäße Verfahren in einfacher, unaufwändiger und kostengünstiger Art und Weise realisieren.

Das erfindungsgemäße Verfahren kann so ausgestaltet sein, dass das erste Zahlungssystem mit dem ersten Kommunikationsnetz und das zweite Zahlungssystem mit einem zweiten Kommunikationsnetz verbunden ist, und dass das erste Kommunikationsnetz mittels des kommunikationsverbindungsaufbau-steuernden Signalisierungssystems mit dem zweiten Kommunikationsnetz verbindbar ist. Dabei ist es vorteilhaft, dass das erfindungsgemäße Verfahren selbst dann anwendbar ist, wenn sich die beteiligten Zahlungssysteme in verschiedenen Kommunikationsnetzen befinden, an diese angeschlossen bzw. mit diesen verbunden sind.

Das erfindungsgemäße Verfahren kann so ausgeführt werden, dass von dem ersten Zahlungssystem ein Abbuchen einer Zahlungssumme von einem Zahlungskonto veranlasst wird,
bei erfolgreicher Abbuchung eine Erfolgsnachricht von dem ersten Zahlungssystem mittels des kommunikationsverbindungsaufbau-steuernden Signalisierungssystems an das zweite Zahlungssystem übertragen wird, und
daraufhin von dem zweiten Zahlungssystem eine Empfänger-Erfolgsnachricht zu dem Zahlungsempfänger übertragen wird. Hierbei ist besonders vorteilhaft, dass durch die Verwendung des (z. B. vorausbezahlten) Zahlungskontos des Zahlungsschuldners für den Zahlungsempfänger kein Zahlungsausfallrisiko besteht. Außerdem ermöglicht diese Ausgestaltung des erfindungsgemäßen Verfahrens, die bei Telekommunikationsnetzen zur Bezahlung von Gesprächsgebühren bekannten "Prepaid"-Guthabenkonten zu benutzen.

Das erfindungsgemäße Verfahren kann auch so ausgestaltet werden, dass von dem ersten Zahlungssystem ein Erfassen der Zahlungssumme zur späteren Verrechnung mit dem Zahlungsschuldner veranlasst wird,
bei erfolgreicher Erfassung eine Erfolgsnachricht von dem ersten Zahlungssystem mittels des kommunikationsverbindungsaufbau-steuernden Signalisierungssystems an das zweite Zahlungssystem übertragen wird, und
daraufhin von dem zweiten Zahlungssystem eine Empfänger-Erfolgsnachricht zu dem Zahlungsempfänger übertragen wird. Ein derartiges Verfahren ermöglicht es in vorteilhafter Weise, die Zahlungssummen zeitverzögert über Rechnungen mit dem Zahlungsschuldner zu verrechnen; dazu können beispielsweise die bei Telekommunikationsnetzen bekannten Rechnungserstellungssysteme von Netzwerkbetreibern genutzt werden.

Bei dem erfindungsgemäßen Verfahren kann als kommunikationsverbindungsaufbau-steuerndes Signalisierungssystem das "Session Initiation Protocol" (SIP) verwendet werden. Dieses "Session Initiation Protocol" wird zur Signalisierung des Aufbaus, der Durchführung und des Abbaus von z.B. Sprach-Telefonaten oftmals in Telekommunikationsnetzen verwendet. Durch Nutzung dieses an sich bereits bekannten, jedoch für ganz andere Zwecke vorgesehenen Protokolls können die Zahlungsnachrichten mit einem geringen Aufwand übertragen werden.

Als Zahlungsnachricht kann eine nach Vorgaben des "Session Initiation Protocol" aufgebaute Nachricht "INVITE" gesendet wird. In einem Kopfteil (Header) der Nachricht "INVITE" können Informationen enthalten sein (und daher mit der Nachricht übertragen werden), die dem ersten Zahlungssystem eine Bearbeitung der Geldzahlung ermöglichen.

Als Erfolgsnachricht kann eine nach Vorgaben des "Session Initiation Protocol" aufgebaute Nachricht "200 OK" gesendet werden. In einem Kopfteil (Header) der Nachricht "200 OK" können Informationen enthalten sein (und folglich mit der Nachricht übertragen werden), die dem zweiten Zahlungssystem eine Zuordnung der Nachricht "200 OK" zu der zuvor übertragenen Nachricht "INVITE" ermöglichen.

Die soeben genannten Ausführungsbeispiele haben den Vorteil, dass bereits bekannte Nachrichten verwendet werden können, die lediglich für die Benutzung bei dem erfindungsgemäßen Verfahren angepasst zu werden brauchen. Dadurch brauchen zum Transport von "Session Initiation Protocol"-Nachrichten verwendete Einrichtungen (z.B. Vermittlungsstellen) nicht oder nur geringfügig modifiziert zu werden, da diese für den Transport dieser Nachrichten eingerichtet sind.

Die obengenannte Aufgabe wird ebenfalls gelöst durch ein Verfahren zur Kommunikation zwischen einem ersten Zahlungssystem eines ersten Kommunikationsnetzes und einem zweiten Zahlungssystem, wobei durch das erste Zahlungssystem erste Zahlungsvorgänge zwischen dem ersten Zahlungssystem zugeordneten ersten Zahlungsschuldnern und dem ersten Zahlungssystem zugeordneten ersten Zahlungsempfängern durchführbar sind, durch das zweite Zahlungssystem zweite Zahlungsvorgänge zwischen dem zweiten Zahlungssystem zugeordneten zweiten Zahlungsschuldnern und dem zweiten Zahlungssystem zugeordneten zweiten Zahlungsempfängern durchführbar sind, bei dem
zum Ermöglichen eines Fremd-Zahlungsvorganges zwischen einem der ersten Zahlungsschuldner und einem der zweiten Zahlungsempfänger eine den Fremd-Zahlungsvorgang betreffende Zahlungsnachricht von dem zweiten Zahlungssystem mittels eines kommunikationsverbindungsaufbau-steuernden Signalisierungssystems an das erste Zahlungssystem gesendet wird. Hierbei ist vorteilhaft, dass zur Übertragung der Zahlungsnachrichten ein an sich für einen ganz anderen Zweck (nämlich zur Signalisierung und damit Vorbereitung des Aufbaus, der Unterhaltung und des Abbaus von z.B. Sprach-Telefonaten) vorgesehenes kommunikationsverbindungsaufbau-steuernde Signalisierungsprotokoll verwendet wird. Dadurch lässt sich das erfindungsgemäße Verfahren in einfacher und unaufwändiger Art und Weise und damit auch besonders kostengünstig realisieren.

Dieses Verfahren kann so ausgestaltet werden, dass die Zahlungssysteme mit unterschiedlichen Kommunikationsnetzen verbunden sind, und mittels des kommunikationsverbindungsaufbau-steuernden Signalisierungsprotokolls mehrere Kommunikationsnetze verbindbar sind. Damit kann vorteilhafterweise eine Kommunikation zwischen den Zahlungssystemen auch dann stattfinden, wenn diese verschiedenen Kommunikationsnetzen zugeordnet sind.

Dabei kann als kommunikationsverbindungsaufbau-steuerndes Signalisierungsprotokoll das "Session Initiation Protocol" verwendet werden. Durch Nutzung dieses an sich bereits bekannten, jedoch für ganz andere Zwecke vorgesehenen Protokolls können die Zahlungsnachrichten mit einem geringen Aufwand übertragen werden.

Bei den bisher genannten Verfahren kann von dem ersten Zahlungssystem ein "SIP User Agent" und von dem zweiten Zahlungssystem ein "SIP Server" gebildet werden.

Zur weiteren Erläuterung der Erfindung ist in
Fig. 1 eine schematische Darstellung zweier Kommunikationsnetze zur Durchführung der erfindungsgemäßen Verfahren, und
Fig. 2 ein Ausführungsbeispiel eines Ablaufes der erfindungsgemäßen Verfahren dargestellt.

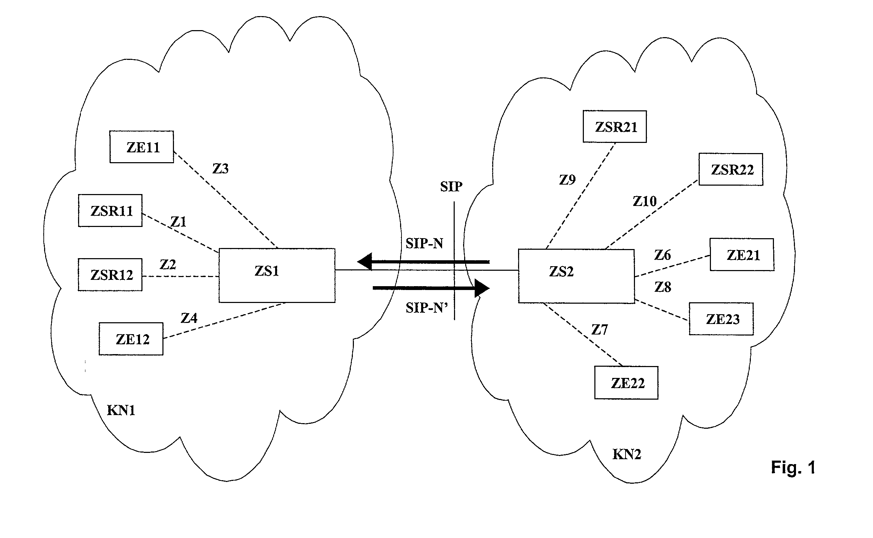

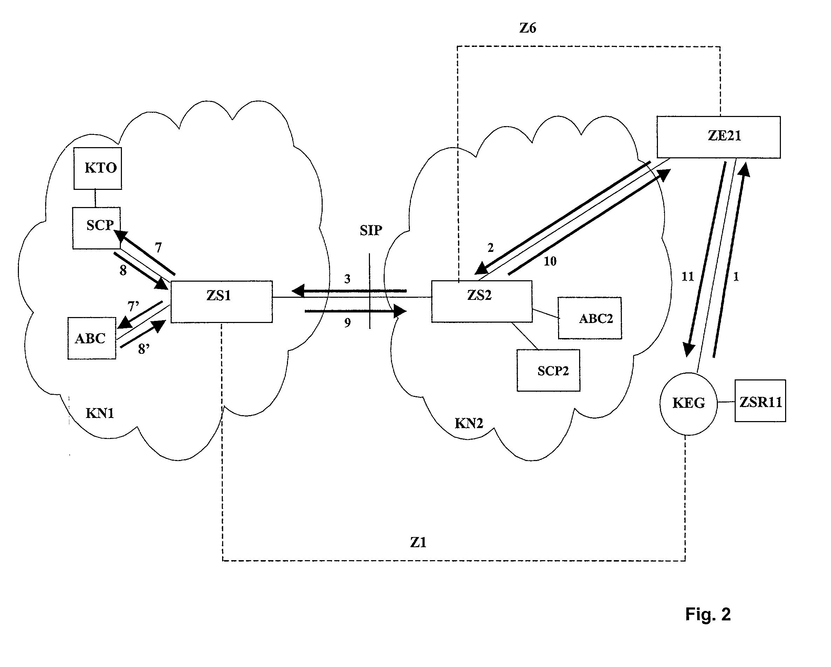

Auf der linken Seite der Figur 1 ist ein erstes Kommunikationsnetz KN1 dargestellt, bei dem es sich beispielsweise um ein Telefon-Kommunikationsnetz (also z.B. um ein Festnetz oder ein Mobilfunknetz) oder auch um einen Teil des Internets handeln kann. In diesem Ausführungsbeispiel hat das erste Kommunikationsnetz die Form eines Telefonnetzes, welches eine Struktur eines Intelligenten Netzes (IN = Intelligent Network) aufweist (vgl. Fig. 2). In dem ersten Kommunikationsnetz KN1 befindet sich ein erstes Zahlungssystem ZS1, dem eine Mehrzahl von Zahlungsschuldnern und Zahlungsempfängern zugeordnet sind. Als Beispiel sind ein erster Zahlungsschuldner ZSR11, ein zweiter Zahlungsschuldner ZSR12, ein erster Zahlungsempfänger ZE11 und ein zweiter Zahlungsempfänger ZE12 dargestellt, die alle dem ersten Zahlungssystem ZS1 zugeordnet sind (beispielsweise haben sich diese bei dem ersten Zahlungssystem ZS1 angemeldet und sind als zugelassene Benutzer in einer nicht dargestellten Datenbank des ersten Zahlungssystems ZS1 registriert). Die Zuordnungen sind als strichlierte Linien Z1, Z2, Z3 und Z4 symbolisiert. Das Zahlungssystem ZS1 für sich allein ist in der Lage, Zahlungsvorgänge zwischen den ihm zugeordneten Zahlungsschuldnern und Zahlungsempfängern zu ermöglichen bzw. diese durchzuführen. Beispielsweise kann von einem nicht dargestellten Guthabenkonto des zweiten Zahlungsschuldners ZSR12 ein bestimmter Geldbetrag abgebucht und auf ein ebenfalls nicht dargestelltes Konto des ersten Zahlungsempfängers ZE11 aufgebucht werden.

Auf der rechten Seite der Figur 1 ist ein zweites Kommunikationsnetz KN2 dargestellt, bei dem es sich ebenfalls um ein Telefon-Kommunikationsnetz oder um einen Teil des Internets handeln kann. In diesem Ausführungsbeispiel hat auch das zweite Kommunikationsnetz die Form eines Telefonnetzes, welches eine Struktur eines Intelligenten Netzes (IN) aufweist (vgl. Fig. 2). In dem zweiten Kommunikationsnetz KN2 befindet sich ein zweites Zahlungssystem ZS2, dem ebenfalls eine Mehrzahl von Zahlungsschuldnern und Zahlungsempfängern zugeordnet sind. Als Beispiel sind ein dritter Zahlungsschuldner ZSR21, ein vierter Zahlungsschuldner ZSR22, ein dritter Zahlungsempfänger ZE21, ein vierter Zahlungsempfänger ZE22 und ein fünfter Zahlungsempfänger ZE23 dargestellt, die alle dem zweiten Zahlungssystem ZS2 zugeordnet sind; die Zuordnungen sind als strichlierte Linien Z6 bis Z10 symbolisiert. Das Zahlungssystem ZS2 für sich allein ist in der Lage, Zahlungsvorgänge zwischen den ihm zugeordneten Zahlungsschuldnern ZSR21 und ZSR22 und den Zahlungsempfängern ZE21, ZE22 und ZE23 zu ermöglichen bzw. diese durchzuführen.

Um nun auch Zahlungsvorgänge zwischen solchen Zahlungsschuldnern und Zahlungsempfängern zu ermöglichen und durchzuführen, die verschiedenen Zahlungssystemen zugeordnet sind (solche Zahlungsvorgänge sollen als Fremd-Zahlungsvorgänge bezeichnet werden), werden solche Fremdzahlungen beschreibende Nachrichten SIP-N und SIP-N' über ein kommunikationsverbindungsaufbau-steuerndes Signalisierungsprotokoll SIP zwischen den Zahlungssystemen übertragen. Dabei sind die Nachrichten SIP-N und SIP-N' nach einem "Session Initiation Protocol" (SIP) aufgebaut. Dieses "Session Initiation Protocol" ist in der Druckschrift "SIP: Session Initiation Protocol", von M. Handley u.a., Request for Comments: 2543, Network Working Group, vom März 1999 beschrieben. Die Zahlungssysteme sind dazu so ausgestaltet, dass sie in der Lage sind, nach dem "Session Initiation Protocol" (SIP) aufgebaute SIP-Nachrichten an andere Zahlungssysteme zu senden bzw. von diesen zu empfangen.

Die Zahlungssysteme können sich - wie in der Figur 1 dargestellt - in den jeweiligen Kommunikationsnetzen befinden, sie können z.B. einen Netzknoten der Kommunikationsnetze bilden. Die Zahlungssysteme können allerdings auch unabhängig von den Kommunikationsnetzen bestehen und an diese lediglich angeschlossen oder mit diesen verbunden sein.

In der Figur 2 sind das bereits aus der Figur 1 bekannte erste Kommunikationsnetz KN1, das erste Zahlungssystem ZS1 eines ersten Zahlungsdienstleisters sowie das zweite Kommunikationsnetz KN2 und das zweite Zahlungssystem ZS2 eines zweiten Zahlungsdienstleisters dargestellt. Im folgenden soll detailliert ein Verfahren zum Ermöglichen einer Geldzahlung sowie ein Verfahren zur Kommunikation zwischen Zahlungssystemen beschrieben werden.

Es soll als Beispiel beschrieben werden, dass ein Käufer bei einem Händler einen Kaufvorgang tätigen möchte und für diesen Kaufvorgang eine Geldzahlung des Käufers an den Händler ermöglicht und durchgeführt wird. Der Käufer stellt also in diesem Falle den (in der Fig. 1 als "ersten Zahlungsschuldner" bezeichneten) Zahlungsschuldner ZSR11 dar, der über ein Kommunikationsendgerät KEG (z. B. über ein Handy, einen Laptop oder einen Palmtop) verfügt. Dieser Zahlungsschuldner ZSR11 wickelt normalerweise seine Zahlungen unter Nutzung des ersten Zahlungssystems ZS1 eines Zahlungsdienstleisters (Payment Service Providers) ab; daher ist das Kommunikationsendgerät KEG dem ersten Zahlungssystem ZS1 des ersten Kommunikationsnetzes KN1 zugeordnet. Die Zuordnung ist symbolisch durch die gestrichelte Linie Z1 dargestellt. (Genaugenommen ist oftmals nicht das Kommunikationsendgerät an sich dem ersten Zahlungssystem zugeordnet, sondern die Zuordnung wird unter Nutzung von Informationen realisiert, die auf einer temporär zum Zeitpunkt der Nutzung mit dem Kommunikationsendgerät verbundenen Chipkarte - einer sog. SIM-Karte eines Nutzers des Kommunikationsendgerätes - gespeichert sind. Zum Nutzungszeitpunkt stellen das Kommunikationsendgerät und die Chipkarte jedoch eine Einheit dar, so dass in diesem Sinne tatsächlich das Kommunikationsendgerät dem Zahlungssystem zugeordnet ist.) Der Händler stellt den (im Zusammenhang mit der Fig.1 als "dritten Zahlungsempfänger" bezeichneten) Zahlungsempfänger ZE21 dar, welcher seine Zahlungen unter Benutzung des zweiten Zahlungssystems ZS2 abwickelt. Daher ist dem Zahlungsempfänger ZE21 (bzw. dessem nicht näher dargestellten Zahlungsempfänger-Kommunikationsendgerät) das zweite Zahlungssystem ZS2 zugeordnet (Zuordnung Z6). Bei dem ersten Kommunikationsnetz KN1 kann es sich z.B. um ein Kommunikationsnetz handeln, bei dem der Zahlungsdienstleister des Käufers auch gleichzeitig Netzwerkoperator ist; ebenso kann es sich bei dem zweiten Kommunikationsnetz KN2 um ein Kommunikationsnetz handeln, bei dem der Zahlungsdienstleister des Händlers Netzwerkoperator ist; dies ist aber nicht notwendig.

Der Zahlungsschuldner ZSR11 sendet nun mittels seines Kommunikationsendgerätes KEG zur Tätigung des Kaufvorganges eine Kaufnachricht (Pfeil 1) an den Zahlungsempfänger ZE21. Der Zahlungsempfänger bestimmt den Preis für den gewünschten Kaufgegenstand und sendet eine Zahlungsaufforderungsnachricht (Pfeil 2) an das zweite Zahlungssystem ZS2. Der Zahlungsempfänger ZE21 hat aufgrund der Tatsache, dass er des öfteren Zahlungsvorgänge mit dem zweiten Zahlungssystem ZS2 des zweiten Zahlungsdienstleiters durchführt, ein Vertragsverhältnis mit diesem zweiten Zahlungsdienstleister, so dass der zweite Zahlungsdienstleister mittels des zweiten Zahlungssystems ZS2 sofort auf die Zahlungsaufforderungsnachricht 2 hin für den Zahlungsempfänger ZE21 tätig wird. Oftmals übernimmt ein Netzwerkoperator (Network Operator) des zweiten Kommunikationsnetzes KN2 die Rolle eines Zahlungsdienstleisters, so dass es ausreicht, wenn der Zahlungsempfänger die Zahlungsaufforderungsnachricht 2 an den Netzwerkoperator des zweiten Kommunikationsnetzes KN2 sendet, wobei es sich bei dem zweiten Kommunikationsnetz KN2 beispielsweise um das Kommunikationsnetz handeln kann, über das der Zahlungsempfänger normalerweise seine Kommunikationsverbindungen durchführt.

Die zu dem zweiten Zahlungssystem ZS2 übersandte Zahlungsaufforderungsnachricht 2 enthält u.a. Angaben über den Zahlungsschuldner ZSR11, beispielsweise dessen Mobilfunk-Rufnummer MSISDN. Das zweite Zahlungssystem ZS2 erkennt (beispielsweise an der Mobilfunk-Rufnummer MSISDN nach Durchsuchen einer Datenbank), dass der Zahlungsschuldner ZSR11 (bzw. dessen Kommunikationsendgerät KEG) nicht dem zweiten Zahlungssystem ZS2 zugeordnet ist, also beispielsweise sich bisher nicht bei dem zweiten Zahlungssystem angemeldet hat, um dieses für Zahlungen zu nutzen.

Das zweite Zahlungssystem ZS2 erkennt jedoch aus mit der Zahlungsaufforderungsnachricht 2 mitgelieferten Informationen über den Zahlungsschuldner (beispielsweise aus der Mobilfunkrufnummer MSISDN dessen Kommunikationsendgerätes KEG), dass es sich bei dem Zahlungsschuldner um einen Teilnehmer des ersten Kommunikationsnetzes KN1 handelt und dass demzufolge dieser Teilnehmer seine Zahlungsgeschäfte über das erste Zahlungssystem ZS1 des ersten Kommunikationsnetzes KN1 abwickelt. Es ist aber ebenso möglich, dass das zweite Zahlungssystem ZS2 diese Information auf eine andere Art und Weise erhält; beispielsweise kann an das zweite Zahlungssystem ZS2 eine Datenbank angeschlossen sein, in der Informationen über potentielle Zahlungsschuldner sowie die von ihnen verwendeten und daher ihren Kommunikationsendgeräten zugeordneten Zahlungssysteme enthalten sind.

Daraufhin erzeugt das zweite Zahlungssystem ZS2 eine die Zahlungsaufforderungsnachricht 2 betreffende Zahlungsnachricht 3 in Form einer nach dem "Session Initiation Protocol" (SIP) aufgebauten Nachricht "INVITE". Diese Nachricht "INVITE" wird gegenüber ihrem bisher bekannten Aufbau dadurch verändert, dass in ihren "Header" (Kopfteil) jene Informationen eingefügt werden, die ein fremdes Zahlungssystem benötigt, um den Zahlungsvorgang zu ermöglichen und durchzuführen, um also die Geldzahlung zu bearbeiten. Diese Informationen werden aus der Zahlungsaufforderungsnachricht 2 übernommen oder z.B. aus Datenbanken des zweiten Zahlungssystems ZS2 ausgelesen.

Das zweite Zahlungssystem ZS2 sendet nun die derart modifizierte Zahlungsnachricht 3 an das erste Zahlungssystem ZS1. Dabei agiert das zweite Zahlungssystem ZS2 als ein sog. "SIP User Agent". Das erste Zahlungssystem ZS1 empfängt die Zahlungsnachricht 3; dabei agiert das erste Zahlungssystem ZS1 als ein sog. "SIP Server".

Das erste Zahlungssystem ZS1 erhält in diesem Ausführungsbeispiel mit der Zahlungsnachricht 3 die Aufforderung, den Zahlungsschuldner ZSR11 mit einem bestimmten Geldbetrag zu belasten. Das erste Zahlungssystem ZS1 stellt nun (beispielsweise durch Abfrage aus einer ihm zugeordneten Datenbank) fest, dass der Zahlungsschuldner ZSR11 seine Zahlungen bevorzugt unter Nutzung eines ihm zugeordneten Zahlungskontos KTO in Form eines Guthabenkontos (beispielsweise eines "Prepaid"-Kontos des Kommunikationsnetzes KN1) begleicht. Daraufhin sendet das erste Zahlungssystem ZS1 eine Zahlungsanforderung (Pfeil 7) an einen intelligenten Knoten SCP (SCP = Service Control Point) des eine Struktur eines intelligenten Netzes IN (IN = Intelligent Network) aufweisenden ersten Kommunikationsnetzes KN1. Der Dienstesteuerungspunkt SCP hat Zugriff auf das Zahlungs-Konto KTO des Zahlungsschuldners ZSR11 und bewirkt eine Abbuchung der entsprechenden Geldsumme von dem Konto KTO. Bei erfolgreicher Abbuchung bestätigt der Dienstesteuerungspunkt SCP dieses dem ersten Zahlungssystem ZS1 mittels einer entsprechenden Informationsnachricht (Pfeil 8). Daraufhin sendet das erste Zahlungssystem eine Erfolgsnachricht 9 über das kommunikationsverbindungsaufbau-steuernde Signalisierungsprotokoll SIP an das zweite Zahlungssystem ZS2. Als Erfolgsnachricht wird eine nach den Spezifikationen des "Session Initiation Protocol" aufgebaute Nachricht "200 OK" verwendet. Diese Nachricht wird gegenüber Ihrem bekannten Aufbau dadurch modifiziert, dass ihr "Header" mit einer zusätzlichen Identifikationsinformation versehen wird (beispielsweise mit einer Identifikationsnummer), die dem zweiten Zahlungssystem ZS2 eine Zuordnung dieser Nach-richt "200 OK" zu der früher abgesandten Nachricht "INVITE" ermöglicht.

Mit Erhalt dieser Erfolgsnachricht 9 wird das zweite Zahlungssystem ZS2 also über den erfolgreichen Abbuchungsvorgang informiert. In einem folgenden Schritt übersendet das zweite Zahlungssystem ZS2 eine Empfänger-Erfolgsnachricht 10 über den erfolgreichen Abbuchungsvorgang an den Zahlungsempfänger ZE21 (in diesem Falle an den Händler), der daraufhin eine Information 11 an das Kommunikationsendgerät KEG des Zahlungsschuldners ZSR11 sendet, mit der er den Zahlungsschuldner ZSR11 über die erfolgreiche Zahlung informiert und beispielsweise Informationen über die Lieferung des gekauften Produktes oder über die gekaufte oder bestellte Dienstleistung übermittelt. Wenn der Zahlungsschuldner bei dem Zahlungsempfänger Informationsdaten (beispielsweise Informationen über Börsenkurse) gekauft hat, so können diese Informationsdaten als Gegenstand des Kaufes auch direkt mit der Informations-Nachricht 11 an das Kommunikationsendgerät KEG des Zahlungsschuldners ZSR11 übersendet werden.

Wenn - abweichend von dem bisher beschriebenen Verfahren - in dem ersten Zahlungssystem ZS1 des ersten Kommunikationsnetzes KN1 die Information vorliegt, dass der Zahlungsschuldner ZSR11 normalerweise Zahlungen per Rechnung bezahlt (und nicht wie oben beschrieben über das Zahlungskonto KTO), so kann von dem ersten Zahlungssystem ZS1 eine der Nachricht 7 ähnelnde Nachricht 7' anstelle zu dem Dienstesteuerungspunkt SCP zu einem Rechnungs-Zahlungszentrum ABC geleitet werden. Dadurch wird das Rechnungs-Zahlungszentrum ABC (ABC = Administration and Billing Center) veranlasst, die Zahlungssumme zur späteren Verrechnung mit dem Zahlungsschuldner zu erfassen. Zu einem späteren Zeitpunkt wird dann von dem Rechnungs-Zah-lungszentrum ABC eine Rechnung erstellt und an den Zahlungsschuldner ZSR11 gesendet. Das Rechnungs-Zahlungszentrum ABC sendet sofort (in Realzeit - real time) nach der Erfassung der Zahlungssumme eine analog zu der Nachricht 8 aufgebaute Nachricht 8' zu dem ersten Zahlungssystem ZS1, woraufhin das Verfahren in bekannter Weise weitergeführt wird. Bei einer derartigen Ausgestaltung des Verfahrens ist es möglich, das in vielen Telekommunikationsnetzen gebräuchliche Rechnungserstellungsverfahren auch zum Durchführen der Geldzahlung bei dem erfindungsgemäßen Verfahren zu nutzen.

Zum Durchführen der Geldzahlung können auch Banken oder Kreditkartenorganisationen herangezogen werden, indem von dem ersten Zahlungssystem ZS1 entsprechende Nachrichten zu technischen Einrichtungen der Banken oder Kreditkartenorganisationen geleitet werden. Von dem ersten Zahlungssystem ZS1 können auch Währungsumrechnungen durchgeführt werden, wenn der Zahlungsschuldner eine andere Geldwährung benutzt als der Zahlungsempfänger.

Schließlich soll darauf hingewiesen werden, dass auch das zweite Zahlungssystem ZS2 mit einem weiteren Dienstesteuerungspunkt SCP2 und einem weiteren Rechnungs-Zahlungszentrum ABC2 verbunden ist. Somit können bei einem folgenden Verfahrensablauf die Rollen des ersten Zahlungssystems ZS1 und des zweiten Zahlungssystems ZS2 getauscht werden, so dass z.B. ein weiterer Käufer auch dem zweiten Zahlungssystem ZS2 zugeordnet sein kann.

Die beschriebenen Verfahren weisen eine Reihe von Vorteilen auf: Sie ermöglichen Geldzahlungen über die Grenzen von Kommunikationsnetzen hinweg. Insbesondere werden solche Geldzahlungen auch dann ermöglicht und durchgeführt, wenn in verschiedenen Kommunikationsnetzen verschiedene Zahlungssysteme installiert sind und die an der Geldzahlung beteiligten Partner jeweils verschiedene dieser Zahlungssysteme benutzen.

Durch Nutzung der "Session Initiation Protocol"-Vorgaben für die Kommunikation zwischen den Zahlungssystemen wird eine rein proprietäre Kommunikation vermieden; vielmehr wird zwischen verschiedenen Zahlungssystemen in verschiedenen Kommunikationsnetzen eine reibungslose Kommunikation ermöglicht. Durch die Nutzung des an sich bekannten Kommunikationsprotokolls "Session Initiation Protocol" wird ein mit geringem Aufwand zu realisierendes und daher auch kostengünstiges Verfahren ermöglicht. Die Modifikation von bekannten Nachrichten des SIP-Protokolls erlaubt eine einfache und flexible Kommunikation zwischen den beteiligten Zahlungssystemen. Mittels dieser Erweiterungen wird ein an sich bereits bekannter Kommunikationsmechanismus erfindungsgemäß für Geldzahlungszwecke (Charging-Zwecke) verwendet. Da das SIP-Protokoll bereits in Kommunikationsnetzen (z.B. in Voice-over-IP-Netzen) zu Signalisierungszwecken angewandt wird, erscheint eine breite Akzeptanz des erfindungsgemäßen Verfahrens auch über Netzgrenzen hinweg möglich.

## Patentansprüche

1. Verfahren zum Ermöglichen einer Geldzahlung unter Nutzung eines ersten Kommunikationsnetzes (KN1), wobei ein Kommunikationsendgerät (KEG) eines Zahlungsschuldners (ZSR11) einem ersten Zahlungssystem (ZS1) des ersten Kommunikationsnetzes (KN1) zugeordnet (Z1) ist, und wobei ein Zahlungsempfänger (ZE21) einem zweiten Zahlungssystem (ZS2) zugeordnet (Z2) ist, bei dem
- von dem Zahlungsempfänger (ZE21) eine den Zahlungsschuldner (ZSR11) betreffende Zahlungsaufforderungsnachricht (2) zu dem zweiten Zahlungssystem (ZS2) übertragen wird,
- von dem zweiten Zahlungssystem (ZS2) erkannt wird, dass der Zahlungsschuldner (ZSR11) dem ersten Zahlungssystem (ZS1) zugeordnet ist,
- von dem zweiten Zahlungssystem (ZS2) eine die Zahlungsaufforderungsnachricht (2) betreffende Zahlungsnachricht (3) mittels eines kommunikationsverbindungsaufbau-steuernden Signalisierungsprotokolls (SIP) an das erste Zahlungssystem (ZS1) gesendet wird, um das erste Zahlungssystem (ZS1) über die Zahlungsaufforderungsnachricht (2) zu informieren und damit die Geldzahlung zu ermöglichen.

2. Verfahren nach Anspruch 1,
**dadurch gekennzeichnet, dass**
- das erste Zahlungssystem (ZS1) mit dem ersten Kommunikationsnetz (KN1) und das zweite Zahlungssystem (ZS2) mit einem zweiten Kommunikationsnetz (KN2) verbunden ist, und
- dass das erste Kommunikationsnetz (KN1) mittels des kommunikationsverbindungsaufbau-steuernden Signalisierungsprotokolls (SIP) mit dem zweiten Kommunikationsnetz (KN2) verbindbar ist.

3. Verfahren nach Anspruch 1 oder 2,
**dadurch gekennzeichnet, dass**
- von dem ersten Zahlungssystem (ZS1) ein Abbuchen einer Zahlungssumme von einem Zahlungskonto (KTO) veranlasst (7) wird,
- bei erfolgreicher Abbuchung eine Erfolgsnachricht (9) von dem ersten Zahlungssystem (ZS1) mittels des kommunikationsverbindungsaufbau-steuernden Signalisierungsprotokolls (SIP) an das zweite Zahlungssystem (ZS2) übertragen wird, und
- daraufhin von dem zweiten Zahlungssystem (ZS2) eine Empfänger-Erfolgsnachricht (10) zu dem Zahlungsempfänger (ZE21) übertragen wird.

4. Verfahren nach Anspruch 1 oder 2,
**dadurch gekennzeichnet, dass**
- von dem ersten Zahlungssystem (ZS1) ein Erfassen der Zahlungssumme zur späteren Verrechnung mit dem Zahlungsschuldner (ZSR11) veranlasst (7') wird,
- bei erfolgreicher Erfassung eine Erfolgsnachricht (9) von dem ersten Zahlungssystem (ZS1) mittels des kommunikationsverbindungsaufbau-steuernden Signalisierungsprotokolls (SIP) an das zweite Zahlungssystem (ZS2) übertragen wird, und
- daraufhin von dem zweiten Zahlungssystem (ZS2) eine Empfänger-Erfolgsnachricht (10) zu dem Zahlungsempfänger (ZE21) übertragen wird.

5. Verfahren nach einem der Ansprüche 1 bis 4,
**dadurch gekennzeichnet, dass**
- als kommunikationsverbindungsaufbau-steuerndes Signalisierungsprotokoll (SIP) das "Session Initiation Protocol" verwendet wird.

6. Verfahren nach Anspruch 5,
**dadurch gekennzeichnet, dass**
- als Zahlungsnachricht (3) eine nach Vorgaben des "Session Initiation Protocol" aufgebaute Nachricht "INVITE" (3) gesendet wird.

7. Verfahren nach Anspruch 6,
**dadurch gekennzeichnet, dass**
- in einem Kopfteil (Header) der Nachricht "INVITE" (3) Informationen enthalten sind, die dem ersten Zahlungssystem (ZS1) eine Bearbeitung der Geldzahlung ermöglichen.

8. Verfahren nach einem der Ansprüche 5 bis 7,
**dadurch gekennzeichnet, dass**
- als Erfolgsnachricht (9) eine nach Vorgaben des "Session Initiation Protocol" aufgebaute Nachricht "200 OK" (9) gesendet wird.

9. Verfahren nach Anspruch 8,
**dadurch gekennzeichnet, dass**
- in einem Kopfteil (Header) der Nachricht "200 OK" (9) Informationen enthalten sind, die dem zweiten Zahlungssystem (ZS2) eine Zuordnung zu der Nachricht "INVITE" ermöglichen.

10. Verfahren zur Kommunikation zwischen einem ersten Zahlungssystem (ZS1) eines ersten Kommunikationsnetzes (KN1) und einem zweiten Zahlungssystem (ZS2), wobei
- durch das erste Zahlungssystem (ZS1) erste Zahlungsvorgänge zwischen dem ersten Zahlungssystem (ZS1) zugeordneten ersten Zahlungsschuldnern (ZSR11,ZSR12) und dem ersten Zahlungssystem (ZS1) zugeordneten ersten Zahlungsempfängern (ZE11,ZE12) durchführbar sind,
- durch das zweite Zahlungssystem (ZS2) zweite Zahlungsvorgänge zwischen dem zweiten Zahlungssystem (ZS2) zugeordneten zweiten Zahlungsschuldnern (ZSR21,ZSR22) und dem zweiten Zahlungssystem (ZS2) zugeordneten zweiten Zahlungsempfängern (ZE21,ZE22,ZE23) durchführbar sind, bei dem
- zum Ermöglichen eines Fremd-Zahlungsvorganges zwischen einem der ersten Zahlungsschuldner (ZSR11) und einem der zweiten Zahlungsempfänger (ZE21) eine den Fremd-Zahlungsvorgang betreffende Zahlungsnachricht (SIP-N,3) von dem zweiten Zahlungssystem (ZS2) mittels eines kommunikationsverbindungsaufbau-steuernden Signalisierungsprotokolls (SIP) an das erste Zahlungssystem (ZS1) gesendet wird.

11. Verfahren nach Anspruch 10,
**dadurch gekennzeichnet, dass**
- die Zahlungssysteme (ZS1,ZS2) mit unterschiedlichen Kommunikationsnetzen (KN1,KN2) verbunden sind, und mittels des kommunikationsverbindungsaufbau-steuernden Signalisierungsprotokolls (SIP) diese Kommunikationsnetze (KN1,KN2) verbindbar sind.

12. Verfahren nach Anspruch 10 oder 11,
**dadurch gekennzeichnet, dass**
- als kommunikationsverbindungsaufbau-steuerndes Signalisierungsprotokoll das "Session Initiation Protocol" (SIP) verwendet wird.

13. Verfahren nach einem der vorhergehenden Ansprüche,
**dadurch gekennzeichnet, dass**
- von dem ersten Zahlungssystem (ZS1) ein "SIP User Agent" und von dem zweiten Zahlungssystem (ZS2) ein "SIP Server" gebildet wird.
